# EUROPÄISCHE PATENTSCHRIFT

(11) **EP 0 658 831 B1**
(45) Veröffentlichungstag und Bekanntmachung des Hinweises auf die Patenterteilung: **06.08.1997**
(21) Anmeldenummer: 93118599.5
(22) Anmeldetag: 18.11.1993
(51) Int. Cl.: G05B 19/05

(54) **Rechnergestütztes Entwurfsverfahren für ein programmierbares Automatisierungssystem**
Computer aided design method for a programmable automation system
Méthode assistée par ordinateur pour le développement d'un système d'automatisation programmable

(43) Veröffentlichungstag der Anmeldung: 21.06.1995
(73) Patentinhaber: SIEMENS AKTIENGESELLSCHAFT, 80333 München (DE)
(72) Erfinder: Barthel, Herbert, Dipl.-Ing., D-91074 Herzogenaurach (DE); Schütz, Hartmut, Dipl.-Ing., D-91336 Heroldsbach (DE); Daar, Horst, Dr.-Ing., D-91058 Erlangen (DE)

(56) Entgegenhaltungen:
- SIEMENS ENERGY & AUTOMATION Bd. 12, Nr. 4 , JULI/AUGUST 1990, BERLIN DE Seiten 9 - 12 H. HOFMANN ET AL. 'ENHANCING THE SAFETY AND RELIABILITY OF PROCESS I & C'
- AUTOMATISIERUNGSTECHNIK - AT Bd. 41, Nr. 8 , August 1993 , MUNCHEN DE Seiten 307 - 316 H.-G. DESPANG ET AL 'RECHNERGESTÜTZTER ENTWURF VON AUTOMATISIERUNGSANLAGEN UNTER NUTZUNG VON PETRI-NETZTEN AM BEISPIEL EINER PAKETVERTEILANLAGE'
- ADVANCES IN INSTRUMENTATION AND CONTROL Bd. 45, Nr. 3 , 1990 , RESEARCH TRIANGLE PARK US Seiten 1419 - 1431 N. KOBAYASHI & H. NISHIKAWA 'SEQUENCE CONTROL DESIGN USING PERSONAL COMPUTERS'
- Walter Ritter: "Simatik S5 - speicherprogrammierbares Automatisierungsgerät S5-110A, 4. Aufl. 1983, Lehrprogramm aus der Schule für Industrieelektronik und SINUMERIK, Siemens AG, Erlangen, DE

## Beschreibung

Die Erfindung betrifft ein rechnergestütztes Entwurfsverfahren für ein Automatisierungssystem, insbesondere eine speicherprogrammierbare Steuerung zur Steuerung und/oder Überwachung einer technischen Anlage.

Bisher wurde bei der Automatisierung einer technischen Anlage von Fall zu Fall die Anlage und das ihr zugeordnete Automatisierungssystem, z. B. eine speicherprogrammierbare Steuerung, projektiert. Im Mittelpunkt der Projektierung stand dabei die Beherrschung von Ausfällen des Automatisierungssystems, weniger die Beherrschung von Fehlern der Prozeßperipherie, also den Peripheriekanälen, auch wenn dies in Einzelfällen möglich war. Es besteht auch heute noch kein durchgängiges Konzept, Peripheriefehler zu beherrschen, obwohl Peripheriefehler die bei weitem häufigste Fehlerursache bei der Automatisierung darstellen.

Aus Walter Ritter, "Simatik S5 - speicherprogrammierbares Automatisierungsgerät S5-110A, 4. Auflage 1983, Seiten 25 bis 30, einem Lehrprogramm aus der Schule für Industrieelektronik und SINUMERIK, der Siemens AG in Erlangen", ist ein Automatisierungssystem zur Steuerung und/oder Überwachung einer technischen Anlage bekannt, welches eine Zentraleinheit sowie mindestens eine Eingabebaugruppe und mindestens eine Ausgabebaugruppe aufweist. Eingabebaugruppen und Ausgabebaugruppen sind kommunikativ mit der Zentraleinheit verbindbar. Weiterhin ist an die Zentraleinheit ein Programmiergerät anschließbar. Zur Steuerung und/oder Überwachung einer technischen Anlage weist das aus dieser Schrift bekannte Automatisierungssystem die Eingabebaugruppen und Ausgabebaugruppen auf. Dabei enthält die Eingabebaugruppe Eingabeschaltungen für den Anschluß von Signalgebern und die Ausgabebaugruppe Ausgabeschaltungen mit elektronischen Schaltern für den Anschluß von z. B. Schützspulen, Ventilspulen oder Meldelampen.

Die Aufgabe der vorliegenden Erfindung besteht folglich darin, eine Möglichkeit zur systematischen Definition eines geforderten Fehlerverhaltens der Prozeßperipherie zu schaffen und so die häufigste Fehlerursache definiert beherrschbar zu machen.

Die Aufgabe wird durch ein rechnergestütztes Entwurfsverfahren gemäß dem ersten Patentanspruch gelöst.

Die Erfindung beruht dabei auf der Erkenntnis, daß der Anwender nicht eine bestimmte Realisierung eines Peripheriekanals fordert, sondern eine gewisse Funktionalität, d. h. unter anderem ein bestimmtes Fehlerverhalten. Dadurch, daß der Anwender nunmehr die Möglichkeit hat, das geforderte Fehlerverhalten gezielt vorzugeben, wird die Betriebssicherheit des Automatisierungssystems und der automatisierten technischen Anlage beträchtlich erhöht.

Wenn die Programmiereinheit nach der Vorgabe des Peripheriekanals dem Anwender eine Anzahl möglicher Fehlerverhalten anzeigt und der Anwender das geforderte Fehlerverhalten aus der Anzahl der möglichen Fehlerverhalten auswählt, kann der Anwender auf sehr einfache Art und Weise das geforderte Fehlerverhalten definieren.

In analoger Weise kann der Anwender auf sehr einfache Art und Weise die gewünschte Realisierung vorgeben, wenn die Programmiereinheit nach der Vorgabe des geforderten Fehlerverhaltens dem Anwender eine Anzahl zulässiger Realisierungen des Peripheriekanals anzeigt und der Anwender die Realisierung aus der Anzahl der zulässigen Realisierungen auswählt.

Zur Automatisierung einer technischen Anlage ist in der Regel eine Vielzahl von Peripheriekanälen erforderlich. Die zum Projektieren benötigte Zeit wird daher erheblich verkürzt, wenn mehrere Peripheriekanale zu einer Gruppe zusammenfaßbar sind und die Vorgabe des geforderten Fehlerverhaltens und gegebenenfalls auch die Auswahl der Realisierung nur einmal erfolgt.

Weitere Vorteile und Einzelheiten ergeben sich aus der nachfolgenden Beschreibung eines Ausführungsbeispiels, anhand der Zeichnungen sowie in Verbindung mit den weiteren Ansprüchen. Dabei zeigen:
- FIG 1: ein Blockschaltbild eines Programmiergeräts mit einem Automatisierungsgerät,
- FIG 2: mögliche Fehler bei einem Peripherie-Eingangskanal,
- FIG 3 bis 16: verschiedene Realisierungen eines Peripherie-Eingangskanals,
- FIG 17: mögliche Fehler bei einem Peripherie-Ausgangskanal und
- FIG 18 bis 24: mögliche Realisierungen eines Peripherie-Ausgangskanals.

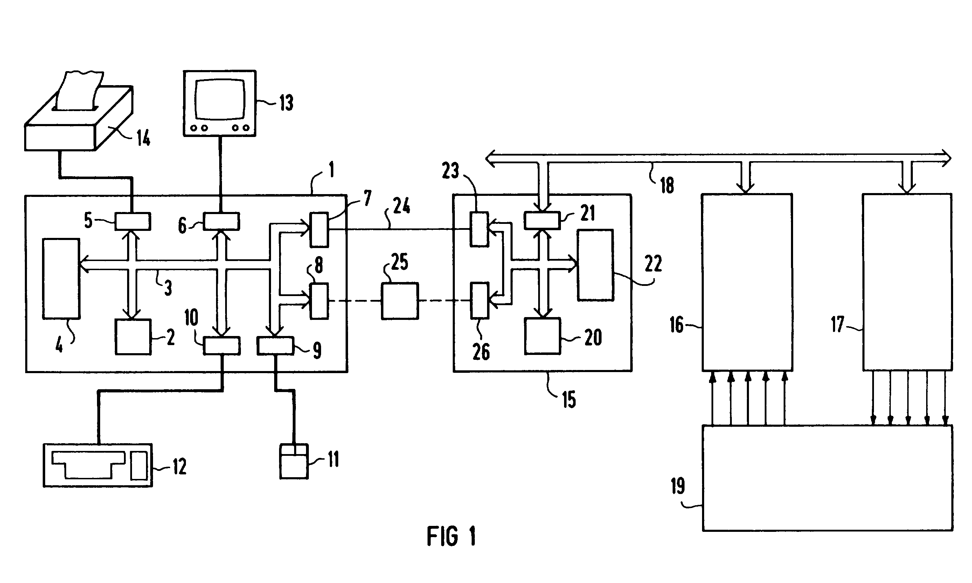

Gemäß FIG 1 weist das Programmiergerät 1 einen Prozessor 2 auf, der über den Programmiergerätebus 3 mit dem Speicher 4 und einer Vielzahl von Schnittstellen 5 bis 10 verbunden ist. An die Schnittstellen 9 bzw. 10 ist eine Maus 11 bzw. eine Tastatur 12 angeschlossen. Dadurch ist ein Anwender bzw. Projekteur in der Lage, Peripheriekanäle einzugeben. Auch kann er eingeben, welches Fehlerverhalten er fordert, d.h., wie ein Peripheriekanal bei Auftreten eines Fehlers reagieren soll. An die Schnittstelle 6 ist ein Monitor 13 angeschlossen, mittels dessen Informationen aller Art an den Anwender bzw. Projekteur ausgebbar sind. An die Schnittstelle 5 ist ein Drucker 14 angeschlossen, so daß Informationen, z. B. die Projektierungsdaten, auch dauerhaft ausgebbar sind.

Die mittels des Programmiergeräts 1 erstellte Projektierung dient der Projektierung eines Automatisierungssystems, im vorliegenden Fall einer modular aufgebauten speicherprogrammierbaren Steuerung. Die Steuerung besteht dabei aus der Zentraleinheit 15, mindestens einer Eingabebaugruppe 16 und mindestens einer Ausgabebaugruppe 17. Zentraleinheit 15 und Baugruppen 16, 17 sind über den Automatisierungsgerätebus 18 miteinander verbunden, so daß über die Eingabebaugruppe 16 Signale von der technischen Anlage 19 an die Zentraleinheit 15 gemeldet werden können und Ausgangssignale von der Zentraleinheit 15 über die Ausgabebaugruppe 17 an die technische Anlage 19 ausgebbar sind.

Die Zentraleinheit 15 der speicherprogrammierbaren Steuerung weist dabei einen Prozessor 20 auf, der über den Buscontroller 21 mit den Baugruppen 16, 17 kommuniziert. Der Prozessor 20 verarbeitet die Eingangssignale dabei gemäß einem im Speicher 22 hinterlegen Anwenderprogramm und errechnet gemäß diesem Programm die Ausgangssignale.

Die mittels des Programmiergeräts 1 erstellte Projektierung soll selbstverständlich nicht nur auf dem Monitor 13 angezeigt bzw. über den Drucker 14 ausgedruckt werden, sondern soll auch der Zentraleinheit 15 eingeprägt werden. Hierzu sind die Zentraleinheit 15 und das Programmiergerät 1 über ihre Schnittstellen 7 und 23 sowie das Kabel 24 miteinander verbunden. Dadurch ist ein direktes Einprägen der Projektierung in die Steuerung möglich. Alternativ dazu wäre es aber auch möglich, die Projektierung über die Schnittstelle 8, einen sogenannten EPROM-Burner in einen Festwertspeicher 25 einzuschreiben, der mit dem Programmiergerät 1 lösbar verbunden ist. Der Festwertspeicher 25 könnte dann später in eine Schnittstelle 26 der Zentraleinheit 15 eingesetzt werden. Diese Methode hat den Vorteil, daß die Projektierung erstellt werden kann, ohne daß Programmiergerät 1 und speicherprogrammierbare Steuerung miteinander verbunden sind.

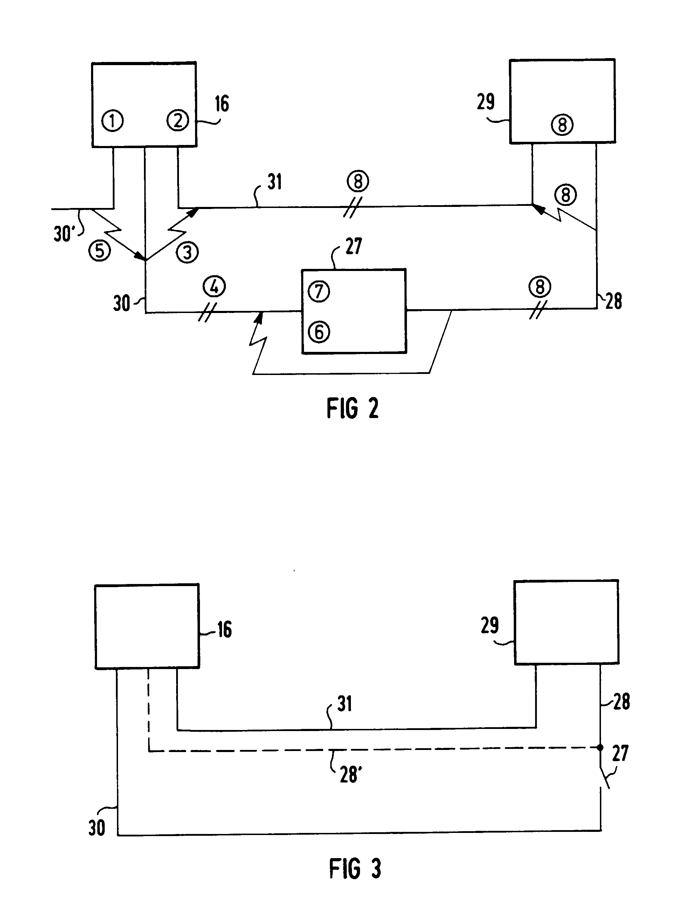

FIG 2 stellt nun anhand eines Peripherie-Digital -Eingabekanals beispielhaft mögliche Fehler dar. Die folgenden Ausführungen sind aber mit geringfügigen, jedem Fachmann geläufigen Änderungen auch auf Analog-Eingabekanäle anwendbar.

Im Normalbetrieb ist ein Geber 27 über die Leitung 28 mit einer Laststromversorgung 29 und ausgangsseitig über die Leitung 30 mit der Eingabebaugruppe 16 verbunden. Ferner weisen die Baugruppe 16 und die Laststromversorgung 29 Masseanschlüsse auf, die über die Leitung 31 miteinander verbunden sind. Diese Beschaltung stellt den ordnungsgemäßen Normalbetrieb dar. Abweichend von diesem Normalbetrieb können folgende Fehler auftreten:
(1) Die Baugruppe 16 kann derart defekt sein, daß sie stets ein Eins-Signal vom Geber 27 einliest, unabhängig davon, welches Signal der Geber 27 tatsächlich liefert.
(2) Die Baugruppe 16 kann derart defekt sein, daß sie stets ein Null-Signal vom Geber 27 einliest, unabhängig davon, welches Signal der Geber 27 tatsächlich liefert.
(3) Die Gebersignalleitung 30 kann mit Masse kurzgeschlossen sein.
(4) Die Gebersignalleitung 30 kann unterbrochen sein.
(5) Die Gebersignalleitung 30 kann mit einer anderen Gebersignalleitung 30' kurzgeschlossen sein.
(6) Der Geber 27 kann intern kurzgeschlossen sein.
(7) Der Geber 27 kann intern unterbrochen sein.
(8) Die Laststromversorgung kann unterbrochen sein. Dies kann dadurch geschehen, daß entweder die Leitung 28 oder die Leitung 31 unterbrochen sind oder daß die Leitungen 28 und 31 miteinander kurzgeschlossen sind.

Die obenstehende Numerierung der Fehler gilt im folgenden für alle Eingangskanäle. Die "gefährlichen" Fehler sind dabei die Fehler (1), (5) und (6). Aufgrund dieser Fehler kann es nämlich geschehen, daß die Eingabebaugruppe 17 fälschlicherweise eine Eins liest, obwohl tatsächlich eine Null ansteht. Derartige Fehler müssen bei allen sicherheitsrelevanten Signalen unbedingt erkannt werden.

FIG 3 zeigt nun die einfachstmögliche Realisierung eines Eingangskanals. Sie besteht, wie sofort ersichtlich ist, lediglich aus dem Geber 27 selbst. Bei dieser Realisierung sind weder Fehlererkennung noch Fehlerlokalisierung möglich. Wenn dagegen beispielsweise die an der Leitung 28 anliegende Lastspannung über die in FIG 3 gestrichelt eingezeichnete Leitung 28' der Baugruppe 16 direkt zugeführt würde, könnte zumindest ein Ausfall der Laststromversorgung 29 erkannt werden.

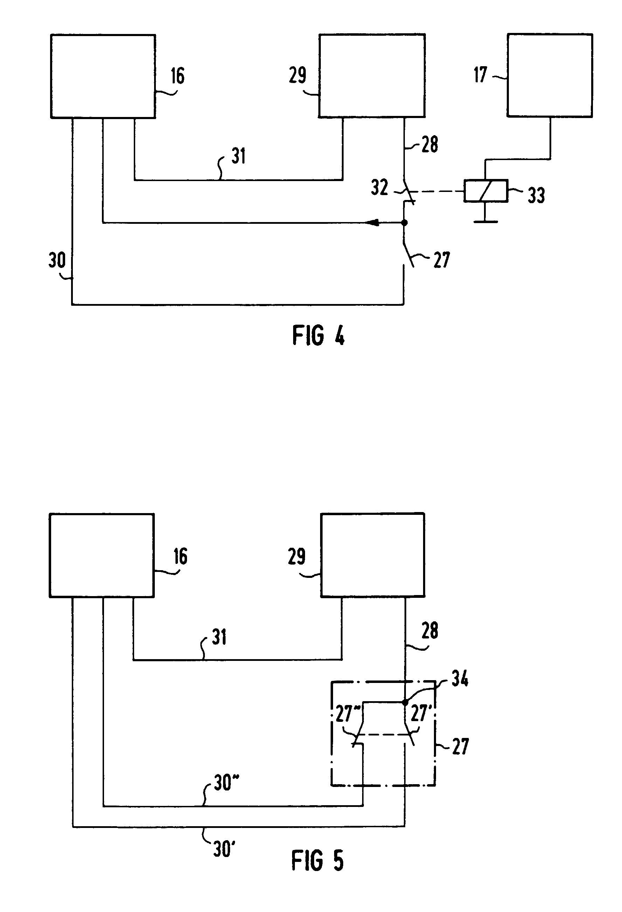

Bei der Realisierung gemäß FIG 4 ist in die Leitung 28 ein Schalter 32 eingeschleift, der über die Ausgabebaugruppe 17 und das Relais 33 betätigbar ist. Dadurch ist es möglich, die Fehler (1) und (5) durch entsprechendes Ansteuern des Schalters 32 jederzeit zu erkennen. Ferner ist es möglich, den Fehler (3) nach einem Ansprechen des Gebers 27, also dem Schließen des Stromkreises zu erkennen. Bei dieser Realisierung ist bei einer Fehlererkennung der Fehler selbstverständlich auch lokalisiert.

FIG 5 zeigt nun eine Realisierung, die mit relativ geringem Aufwand bereits ein recht hohes Maß an Sicherheit bietet. Gemäß FIG 5 ist der Geber 27 nämlich als antivalenter Geber ausgebildet, d. h. er besteht aus zwei Geberzweigen 27', 27", wobei der Geberzweig 27' ein Nullsignal liefert, wenn der Geber 27'' ein Einssignal liefert und umgekehrt. Die Ausgangssignale der Geberzweige 27', 27'' werden über die Leitungen 30', 30'' zwei Eingängen der Baugruppe 16 zugeführt. Mittels dieser relativ einfachen Struktur können die Fehler (1) bis (8) spätestens nach einem Flankenwechsel erkannt werden. Etwas anderes gilt nur dann, wenn der - unwahrscheinliche - Fall auftritt, daß beide Geberzweige 27', 27'' mechanisch versagen. Auch eine Unterbrechung der Leitung 28 nach der Gabelung 34 kann spätestens nach einem Flankenwechsel erkannt werden. Eine Lokalisierung des Fehlers, d.h. eine Feststellung, welcher der beiden Geberzweige 27', 27'' defekt ist, ist aber nicht möglich. Im Ergebnis ist jedoch festzuhalten, daß mit dem antivalenten Geber 27 alle Fehler erkannt werden, sofern nicht beide Geberzweige 27', 27'' mechanisch versagen.

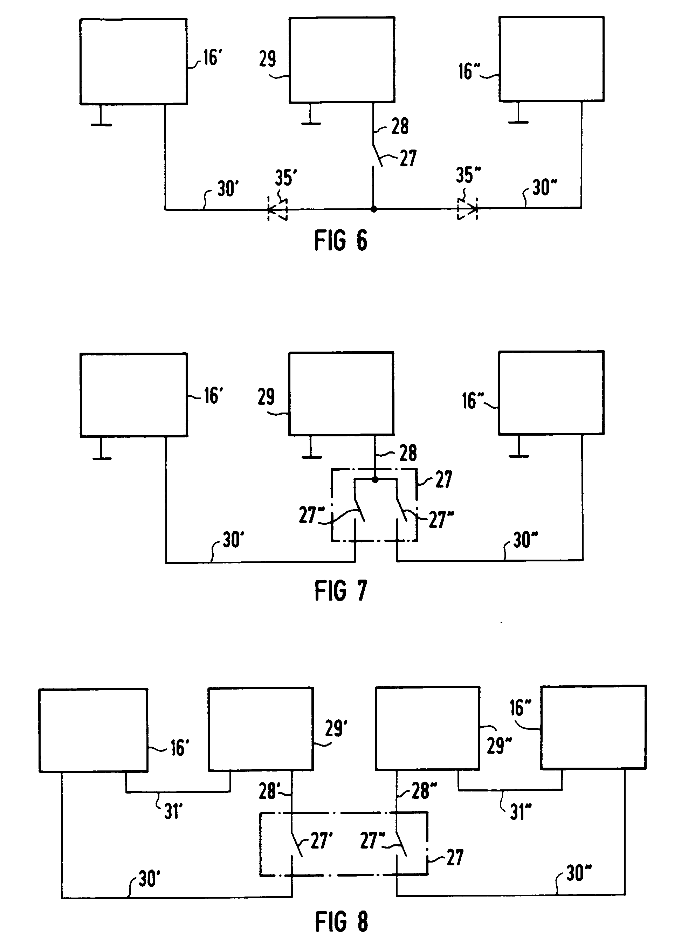

Wenn gemäß der Realisierung nach FIG 6 das Ausgangssignal des Gebers 27 über getrennte Leitungen 30',30" zu zwei verschiedenen Baugruppen 16', 16'' geleitet wird, ist eine Erkennung der Fehler (1), (2) und (4) möglich. Wenn, wie in FIG 6 gestrichelt dargestellt, Dioden 35', 35'' in die Leitungen 30', 30'' geschalten sind, ist auch der Fehler (5) spätestens nach einem Flankenwechsel des vom Geber 27 gelieferten Signals erkennbar.

Bei der Realisierung gemäß FIG 7 besteht der Geber aus zwei gleich angesteuerten Geberzweigen 27', 27", deren Ausgangssignale getrennten Baugruppen 16', 16'' zugeführt werden. Mit dieser Realisierung sind - mit Ausnahme des Fehlers (3) - die Fehler (1) bis (7) spätestens nach einem Flankenwechsel des vom Geber 27 gelieferten Signals erkennbar. Der Fehler ist aber nicht lokalisierbar, d. h. es ist nicht erkennbar, welcher der beiden Zweige defekt ist.

Bei der Realisierung gemäß FIG 8 sind alle Fehler (1) bis (8) spätestens nach einem Flankenwechsel des vom Geber 27 gelieferten Signals erkennbar. Es ist aber ebenfalls nicht feststellbar, welcher der beiden Geber 27', 27'' bzw. welcher der beiden Zweige defekt ist. Der Fehler ist also, ebenso wie bei der Realisierung gemäß FIG 7, nicht lokalisierbar.

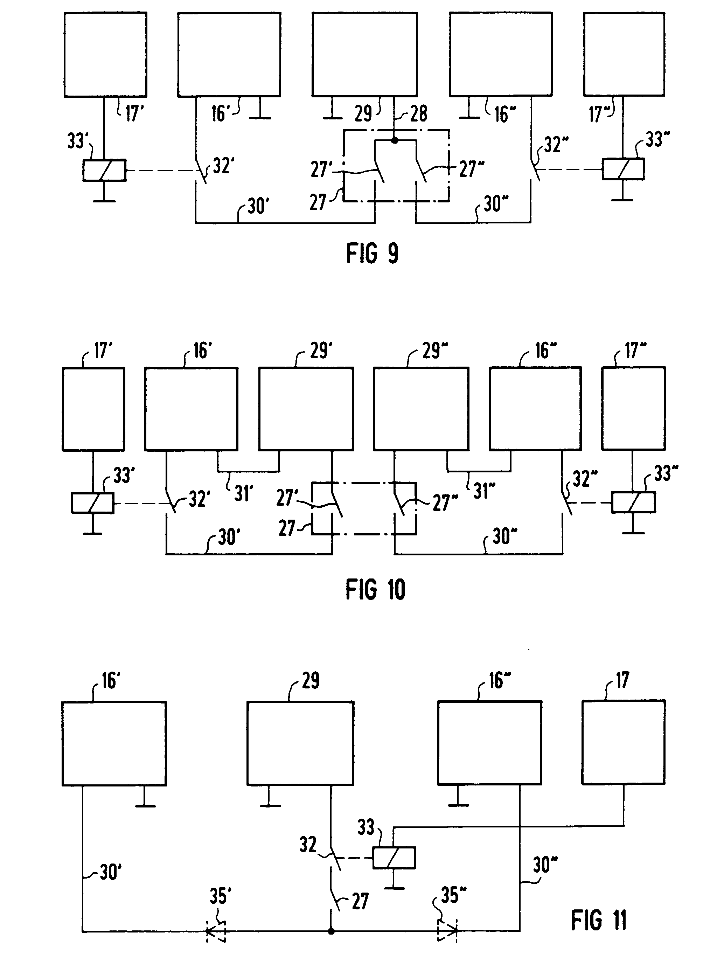

Bei der Realisierung gemäß FIG 9 wird ein Doppelgeber 27 verwendet. Die von den beiden Geberzweigen 27', 27'' gelieferten Ausgangssignale werden über die Leitungen 30', 30'' zwei verschiedenen Eingabebaugruppen 16', 16'' zugeführt. In die Leitungen 30', 30'' sind Schalter 32', 32'' eingeschleift, die über Prüfrelais 33', 33'' aus zwei voneinander getrennten Ausgabebaugruppen 17', 17'' betätigt werden. Mit dieser Realisierung sind mit Ausnahme des Fehlers (3) wieder alle Fehler (1) bis (7) spätestens nach einem Flankenwechsel, d. h. nach einem Ansprechen des Geber 27 detektierbar. Bei einer Signalverschiedenheit, d.h. einem Fehler, kann aufgrund der Schalter 32', 32'' und der Prüfrelais 33', 33'' bei einem Auftreten der Fehler (1), (2), (4) und (7) auch detektiert werden, welcher der beiden Zweige fehlerhaft ist. Diese Fehler können also auch lokalisiert werden.

Bei der Realisierung gemäß FIG 10 sind, verglichen mit der Realisierung gemäß FIG 9, anstelle einer gemeinsamen Laststromversorgung 29 zwei getrennte Laststromversorgungen 29', 29'' vorhanden. Mit dieser Realisierung können alle Fehler (1) bis (8) spätestens nach einem Flankenwechsel erkannt werden. Ferner sind mit Ausnahme der Fehler (5) und (6) auch alle Fehler (1) bis (8) lokalisierbar.

Bei der Realisierung nach FIG 11 ist ein Prüfrelais 33 nebst Schalter 32 zwischen Laststromversorgung 29 und Geber 27 geschaltet. Dadurch können spätestens nach einem Flankenwechsel die Fehler (1), (2) und (4) erkannt und auch lokalisiert werden. Wenn, wie in FIG 11 gestrichelt eingezeichnet, Dioden 35', 35'' in die Zweige zu den Baugruppen 16', 16'' eingeschleift sind, kann auch der Fehler (5) aufgrund einer Diskrepanzanalyseerkannt und lokalisiert werden.

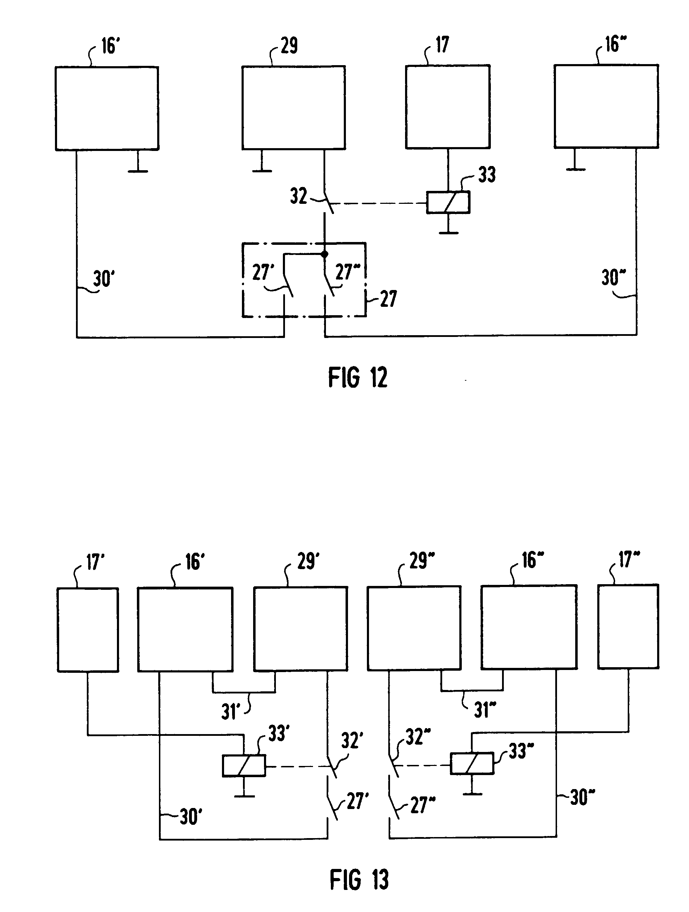

Bei der Realisierung gemäß FIG 12 wird, im Vergleich zu FIG 11, anstelle eines einfachen Gebers 27 ein Doppelgeber 27 mit zwei Geberzweigen 27', 27'' verwendet. Dadurch sind mit Ausnahme des Fehlers (3) die Fehler (1) bis (7) erkennbar. Ferner können diese Fehler bis auf den Fehler (6) auch lokalisiert werden.

Bei der Realisierung gemäß FIG 13 werden zwei voneinander getrennte Geber 27', 27'' von zwei getrennten Laststromversorgungen 29', 29'' gespeist. Die Signale der Geber 27', 27'' werden zwei getrennten Eingabebaugruppen 16', 16'' zugeführt. In die Leitungen zwischen den Laststromversorgungen 29', 29'' und den Gebern 27', 27'' sind Schalter 32', 32'' eingeschleift, die über Relais 33', 33'' betätigbar sind. Mit dieser Realisierung sind alle Fehler (1) bis (8) erkennbar. Mit Ausnahme des Fehlers (6) sind sie auch lokalisierbar.

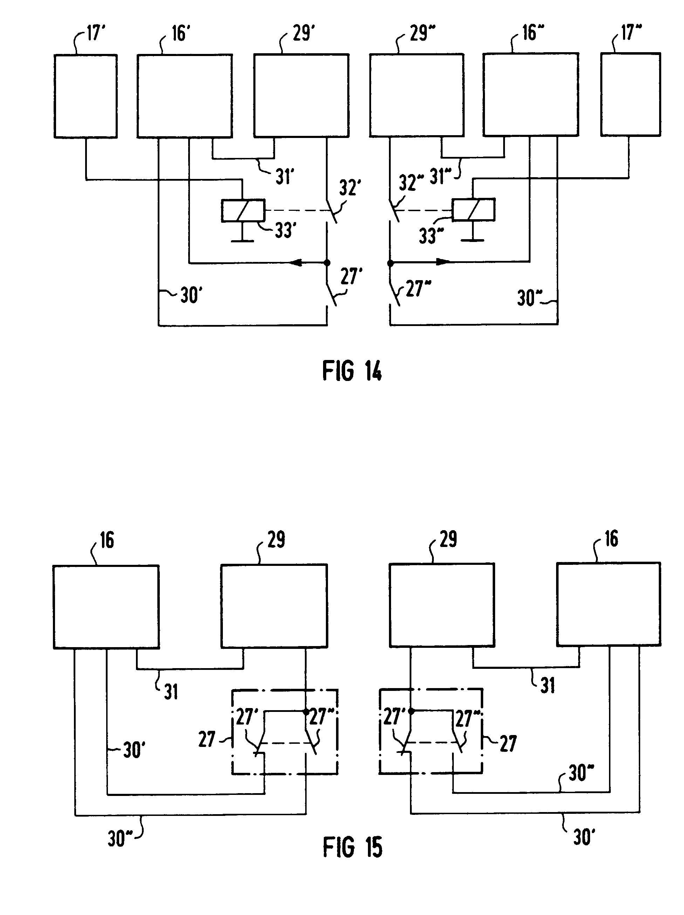

Die Realisierung gemäß FIG 14 entspricht im wesentlichen der Realisierung gemäß FIG 13. Zusätzlich werden jedoch die an den Eingängen der Geber 27', 27'' anstehenden Signale ebenfalls in die Eingabebaugruppen 16', 16'' eingelesen. Aufgrund dieser zusätzlichen Maßnahme kann ein Ausfall der Laststromversorgungen 29', 29'' auch dann detektiert werden, wenn die Geber 27', 27'' (ordnungsgemäß) ein Nullsignal liefern. Auch kann in einem solchen Fall der Fehler (8) ebenfalls lokalisiert werden.

Die Realisierung gemäß FIG 15 entspricht einer parallelen Anordnung von zwei Realisierungen gemäß FIG 5. Mit dieser Realisierung sind alle Fehler (1) bis (8) sowohl spätestens nach einem Flankenwechsel erkennbar als auch lokalisierbar. Einzige Ausnahme ist das mechanische Versagen beider Zweige eines der beiden Geber 27. In einem solchen Fall sind die Fehler (6) und (7) nicht lokalisierbar.

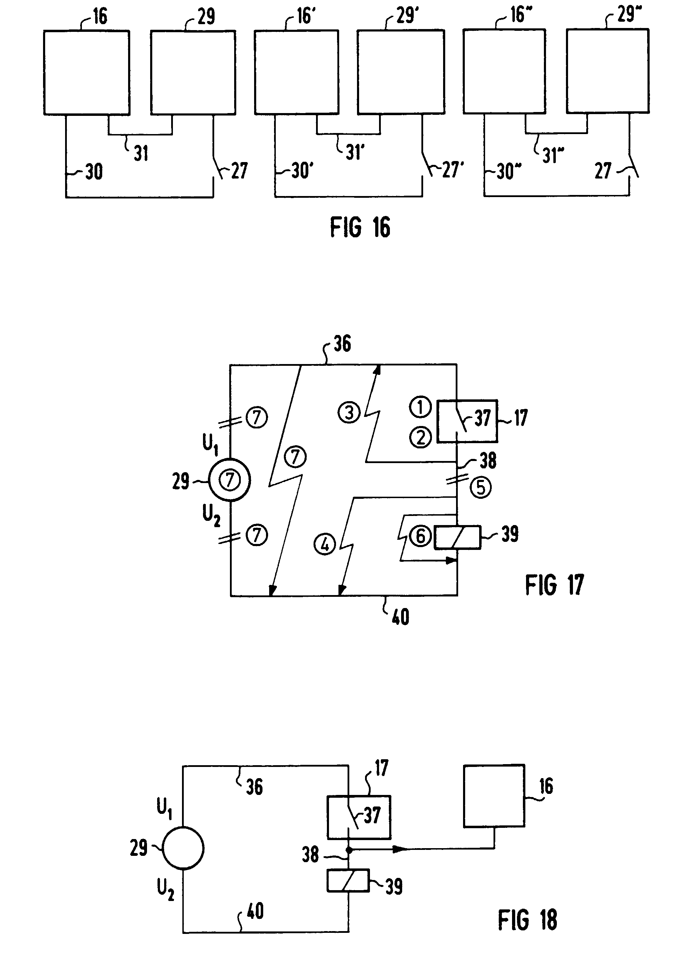

Die Realisierung gemäß FIG 16 ist nun die sicherste aller gezeigten Realisierungen. Mit ihr sind alle Fehler (1) bis (8) spätestens nach einem Flankenwechsel sowohl erkenn- als auch lokalisierbar. Sie besteht aus der Parallelschaltung von drei Realisierungen gemäß FIG 3.

Obenstehende Realisierungen stellen selbstverständlich nur eine Auswahl dar. In der Praxis sind noch mehr Realisierungen möglich. In jedem Fall aber sind alle Realisierungen nebst zugehörigem Fehlerverhalten, d.h. einer Auflistung der Fehler, die bei einer entsprechenden Realisierung erkenn- und/oder realisierbar sind, im Speicher 4 abgespeichert.

In FIG 17 ist nun ein Peripherie-Digital-Ausgabekanal und dessen mögliche Fehler dargestellt. Auch hier gilt, analog zu einem Digital-Eingabekanal, daß die nachfolgenden Ausführungen mit geringfügigen, jedem Fachmann geläufigen Änderungen auch auf Analog-Ausgabekanäle anwendbar sind.

Gemäß FIG 17 liefert die Laststromversorgung (29) ein Potential U₁, das über die Leitung 36 der Ausgabebaugruppe 17 zugeführt wird. In der Baugruppe 17 wird das Potential U₁ einem Schalter 37 zugeführt. Je nachdem, ob der Schalter 37 geschlossen oder geöffnet ist, gibt der betreffende Kanal über die Leitung 38 ein Eins- bzw. ein Null-Signal an das Stellglied 39 aus, das im vorliegenden Fall beispielsweise ein Relais ist. Vom Stellglied 39 aus führt dann die Leitung 40 zurück zur Laststromversorgung 29 zum Potential U₂ und schließt so den Stromkreis.

Abweichend von obenstehend beschriebenen Normalbetrieb können folgende Fehler auftreten:
(1) Die Baugruppe 17 kann derart defekt sein, daß der Schalter 37 stets geschlossen ist, unabhängig davon, welche Sollschaltstellung der Baugruppe 17 von der Zentraleinheit 15 vorgegeben wird.
(2) Die Baugruppe 17 kann derart defekt sein, daß der Schalter 37 stets geöffnet ist, unabhängig davon, welche Sollschaltstellung der Baugruppe 17 von der Zentraleinheit 15 vorgegeben wird.
(3) Die Leitung 38 kann mit dem Potential U₁ kurzgeschlossen sein.
(4) Die Leitung 38 kann mit dem Potential U₂ kurzgeschlossen sein.
(5) Die Leitung 38 kann unterbrochen sein.
(6) Innerhalb des Stellglied 39 kann ein Kurzschluß zwischen der Leitung 38 und der Leitung 40 bestehen.
(7) Die Lastspannungsversorgung 29 kann ausfallen.

Die obenstehende Numerierung der Fehler gilt im folgenden für alle Ausgangskanäle. Die "gefährlichen" Fehler sind dabei die Fehler, die das Stellglied 39 fälschlicherweise in den Zustand Eins bringen, es also ansteuern, obwohl es nicht angesteuert werden sollte. Die "gefährlichen" Fehler sind also die Fehler (1) und (3). Derartige Fehler müssen bei sicherheitsrelevanten Signalen unbedingt erkannt werden. Ebenso muß in einem solchen Fall das Stellglied 39 in den ansteuerungsfreien Zustand gebracht werden können.

Die einfachstmögliche Realisierung eines Eingangskanals ist selbstverständlich die in FIG 17 dargestellte. In diesem Fall sind keinerlei Möglichkeiten der Fehlererkennung, Fehlerlokalisierung und Fehlerkorrektur möglich.

Bei der in FIG 18 dargestellten Realisierung eines Peripherieausgabekanals wird das an der Leitung 38 anliegende Potential abgegriffen und der Eingabebaugruppe 16 zugeführt. Bis auf den Fehler (5) sind damit die Fehler (1) bis (7) erkennbar und - aufgrund der nur einfachen Realisierung - auch lokalisierbar. Eine Beeinflussung der fehlerhaften Ansteuerung des Stellglieds 39 ist aber nicht möglich.

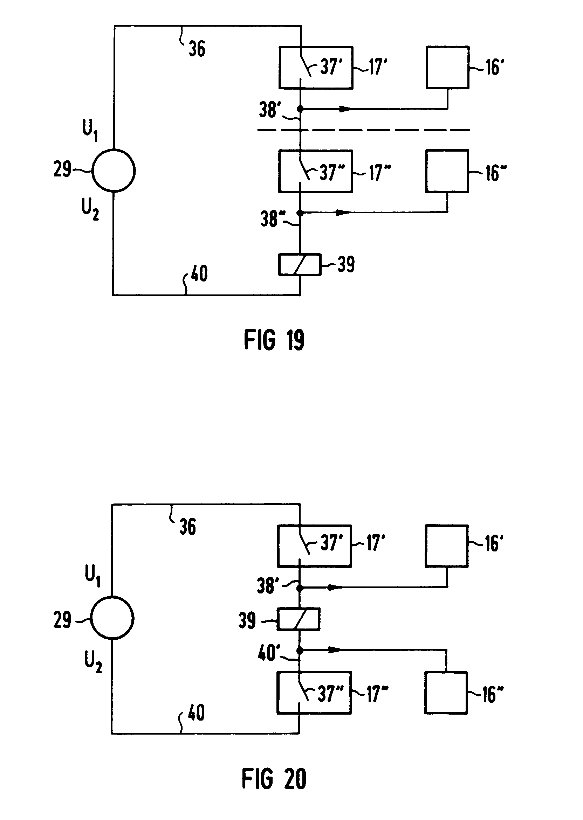

Bei der Realisierung gemäß FIG 19 sind zwei voneinander getrennte Ausgabebaugruppen 17', 17'' vor dem Stellglied 39 in Reihe geschaltet. Die an den Leitungen 38', 38'' anstehende Potentiale werden zwei voneinander getrennten Eingabebaugruppen 16', 16'' zugeführt. Mit dieser Realisierung können ebenfalls bis auf den Fehler (5) alle Fehler (1) bis (7) erkannt werden. Darüber hinaus können die Fehler (1) und (2) auch lokalisiert werden. Es ist also feststellbar, welcher der Schalter 37', 37'' defekt ist. Ferner kann das Stellglied 39 vom Potential U₁ getrennt werden, falls erkannt wird, daß eine der Baugruppen 17', 17'' ein Eins-Signal liefert, obwohl sie ein Nullsignal liefern sollte.

Bei der Realisierung gemäß FIG 20 sind ebenfalls zwei getrennte Baugruppen 17', 17" mit je einem Schalter 37', 37" vorhanden. Im Gegensatz zu der Realisierung gemäß FIG 19 ist bei der Realisierung gemäß FIG 20 die Baugruppe 17" aber hinter dem Stellglied 39 angeordnet. Ferner wird auch das an der Leitung 40' anstehende Potential zurückgeführt. Mit dieser Realisierung sind wieder mit Ausnahme des Fehlers (5) alle Fehler (1) bis (7) erkennbar. Die Fehler (1) bis (4) und (7) sind auch lokalisierbar. Ferner ist es im Falle der Fehler (1) und (3) aufgrund einer Abfrage der Schaltzustände der Schalter 37', 37" möglich, die Ungleichheit der Schaltzustände 1 zu erkennen und beim Erkennen eines solchen Fehlers über die funktionsfähige andere Baugruppe 17", 17' den Stromkreis sicher zu öffnen. Dadurch ist es möglich, das Stellglied 39 spätestens nach einer Latenzzeit T ansteuerungsfrei zu schalten. Die Realisierung gemäß FIG 20 ist also für sicherheitsrelevante Signale geeignet.

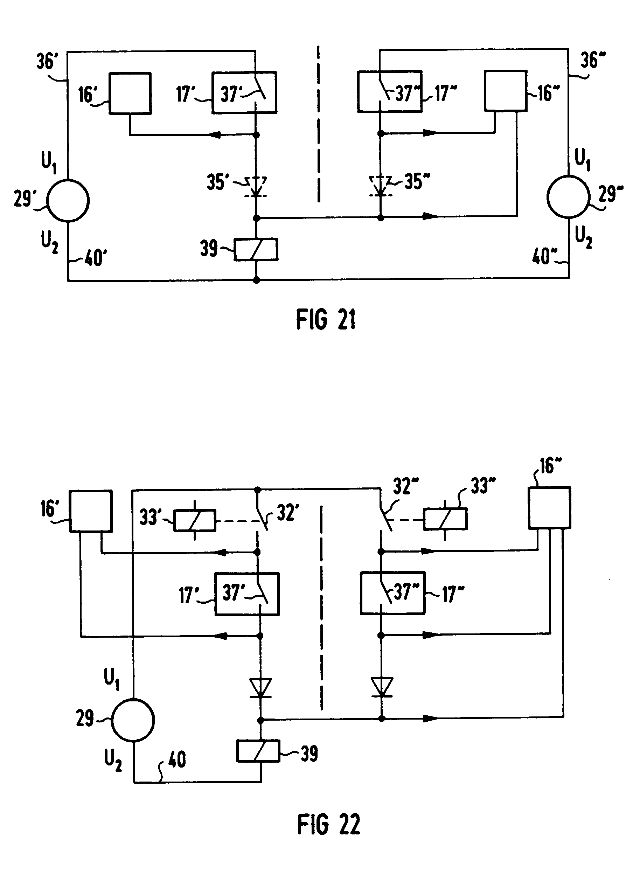

Bei der Realisierung gemäß FIG 21 sind zwei getrennte Laststromversorgungen 29', 29" vorhanden, die über zwei voneinander getrennte Ausgabebaugruppen 17', 17" mit dem Stellglied 39 verbindbar sind. Das vor dem Stellglied 39 anstehende Signal wird der Baugruppe 16" zugeführt. Mit dieser Realisierung sind mit Ausnahme des Fehlers (5) alle Fehler (1) bis (7) erkennbar. Die Fehler (2) und (7) sind auch lokalisierbar, wenn eine Diskrepanzanalyse der von den Baugruppen 17', 17" ausgegebenen Signale durchgeführt wird. Im Falle des Fehlers (2) kann das Stellglied 39 spätestens nach einer Latenzzeit T auch auf Eins gesteuert werden.

Wenn die Laststromversorgungen 29', 29" Gleichstrom liefern, ist es sinnvoll, die Realisierung gemäß FIG 21 durch die gestrichelt eingezeichneten Dioden 35', 35" zu ergänzen. In diesem Fall werden sinnvollerweise auch die Signale unmittelbar hinter den Baugruppen 17', 17" abgegriffen und Eingabebaugruppen 16', 16'' zugeführt. In diesem Fall ist auch der Fehler (1) lokalisierbar.

Bei der Realisierung gemäß FIG 22 ist das Stellglied 39 parallel über zwei Schalter 37', 37'' mit dem Potential U₁ verbunden. Zwischen den Schaltern 37', 37'' und der Laststromversorgung 29 sind Schalter 32', 32'' angeordnet, die über Relais 33', 33'' ansteuerbar sind. Die vor den Baugruppen 17', 17'' anstehenden Signale werden Eingabebaugruppen 16', 16'' zugeführt. Ferner wird das vor dem Stellglied 39 anstehende Signal der Baugruppe 16'' zugeführt. Mit dieser Realisierung sind mit Ausnahme des Fehlers (5) wieder alle Fehler (1) bis (7) erkennbar. Ferner sind die Fehler (1) und (2) auch lokalisierbar, sowie bei Auftreten eines dieser Fehler das Stellglied 39 auf seinen korrekten Wert steuerbar.

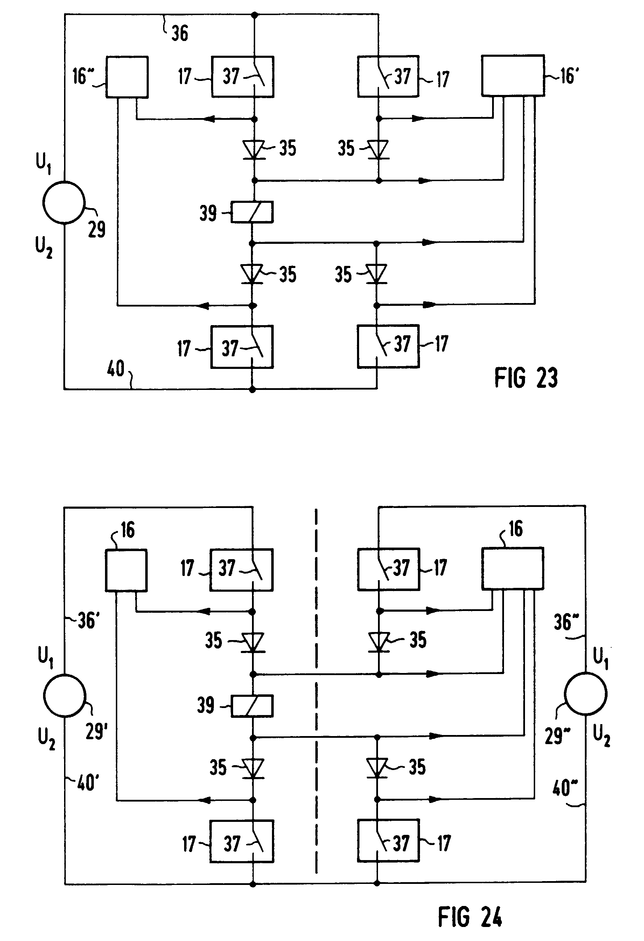

Bei der relativ aufwendigen Realisierung gemäß FIG 23 sind je zwei Schalter 37 vor und nach dem Stellglied 39 angeordnet. Die vor und nach dem Stellglied 39 anstehenden Potentiale werden der Eingabebaugruppe 16' zugeführt. Mit dieser Realisierung sind - bis auf den Fehler (5) - alle Fehler (1) bis (7) erkennbar. Auch sind die Fehler (1) bis (3) und (7) lokalisierbar. Ferner sind die Fehler (1) bis (3) auch korrigierbar. Die Realisierung gemäß FIG 23 empfiehlt sich also insbesondere bei sicherheitsrelevanten Signalen.

Falls die Laststromversorgung 29 Gleichstrom liefert, werden vorzugsweise Dioden 35 zwischen das Stellglied 39 und je einen der Schalter 37 geschaltet. Die zwischen den Dioden 35 und den Schaltern 37 anstehenden Potentiale werden den Baugruppen 16', 16'' zugeführt. Dadurch ist der Fehler (1) noch einfacher lokalisierbar.

Bei der Realisierung gemäß FIG 24 sind zwei Laststromversorgungen 29', 29'' vorhanden, die über je eine vor- und nachgeschaltete Baugruppe 17 auf das Stellglied 39 wirken. Mit dieser Realisierung sind die Fehler (1) bis (7) mit Ausnahme des Fehlers (5) erkennbar. Ferner sind die Fehler (2) und (3) lokalisierbar. Auch ist im Falle der Fehler (1) bis (3) sowie beim Fehler (7) eine entsprechende Korrektur eines fehlerhaften Stellsignals möglich.

Wenn die Laststromversorgungen 29', 29'' wieder Gleichstrom liefern, werden sinnvollerweise Dioden 35 zwischen die Ausgabebaugruppen 17 und das Stellglied 39 geschaltet sowie die zwischen Ausgabebaugruppen 17 und Dioden 35 anstehenden Potentiale erfaßt. Dadurch ist bei seinem Auftreten auch eine Lokalisierung des Fehlers (1) möglich.

Analog zu den Realisierungen von Eingabekanälen stellen die obenstehenden Realisierungen von Ausgabekanälen ebenfalls nur eine Auswahl dar. Auch sind wieder alle Realisierungen nebst zugehörigem Fehlerverhalten, d.h. einer Auflistung der erkennbaren, lokalisierbaren und korrigierbaren Fehler, im Speicher 4 abgespeichert.

Die Gesamtheit der abgespeicherten Realisierungen von Peripheriekanälen bildet die Wissensbasis, aufgrund derer die Programmiereinheit 1 die Realisierungen mit den geforderten Fehlerverhalten ermittelt.

Wenn nun der Anwender bzw. Projekteur ein Automatisierungsgerät für eine bestimmte technische Anlage projektieren will, so gibt er hierzu in der Regel eine Vielzahl von Ein- und Ausgabekanälen, mindestens aber einen Ein- und Ausgabekanal, vor. Diese Eingaben werden vom Programmiergerät 1 im Speicher 4 zwischengespeichert. Dem Programmiergerät 1 ist mit diesen Eingaben bekannt, welche Eingabe- und Ausgabekanäle für die konkret zu projektierende technische Anlage 19 benötigt werden.

Sodann gibt der Anwender vor, welches Fehlerverhalten er von welchem Peripheriekanal fordert. Je nach Wahl des Anwenders kann er dabei entweder das geforderte Fehlerverhalten für jeden Kanal einzeln eingeben oder aber mehrere Peripheriekanäle, die das gleiche geforderte Fehlerverhalten erfüllen sollen, zu einer Gruppe zusammenfassen. Im letzteren Fall muß selbstverständlich die Vorgabe des geforderten Fehlerverhaltens nur einmal erfolgen.

Zur Vorgabe des geforderten Fehlerverhaltens ruft der Anwender den vorher definierten Peripheriekanal bzw. die Gruppe von Peripheriekanälen auf. Das Programmiergerät 1 zeigt daraufhin auf dem Monitor 13 eine Anzahl möglicher Fehlerverhalten an. Der Anwender wählt dann aus, von welchem Fehler er fordert, daß er erkannt, lokalisiert und bei Ausgaben gegebenenfalls korrigiert werden kann.

Die Programmiereinheit 1 vergleicht sodann für jede gespeicherte Realisierung das geforderte Fehlerverhalten mit dem tatsächlichen Fehlerverhalten dieser Realisierung. Die Programmiereinheit 1 ist dadurch in der Lage, eine Liste zulässiger Realisierungen zu finden. Die zulässigen Realisierungen werden wieder auf dem Monitor 13 angezeigt.

Zusätzlich zu jeder Realisierung wird noch mit angezeigt, um welchen Faktor die jeweilige Realisierung gegenüber der einfachsten Realisierung teurer ist, welche Fehlerentdeckungs- und Fehlerlokalisierungsrate sie hat und nach welcher Zeit in der Realisierung im Mittel ein Fehler auftritt (MTBF = mean time between failure).

Der Anwender ist dadurch in der Lage, die von ihm gewünschte Realisierung gemäß der für ihn wichtigen Kriterien gezielt aus der Anzahl der zulässigen Realisierungen auszuwählen. Im Prinzip wäre es aber auch möglich, daß die Programmiereinheit 1 derart voreingestellt ist, daß sie stets die einfachste Realisierung auswählt, die das geforderte Fehlerverhalten zeigt.

Wenn nun die Realisierungen aller Peripheriekanäle bestimmt sind, erstellt die Programmiereinheit die vollständige Projektierung. Die so ermittelte Projektierung wird einerseits in menschenlesbarer Form aus dem Drucker 14 ausgedruckt. Dadurch weiß der Projekteur, wieviel Baugruppen er benötigt und welcher Art diese Baugruppen sein müssen. Ferner weiß er, wie er die einzelnen Baugruppen beschalten muß.

Über die Ausgabe für den Anwender bzw. Projekteur hinaus wird aber auch das Automatisierungsgerät selbst projektiert. Wenn die Programmiereinheit 1 direkt mit dem Zentralgerät 15 des Automatisierungsgeräts verbunden ist, wird die Projektierung direkt in den Speicher 22 eingeschrieben, also dem Automatisierungssystem eingeprägt. Anderenfalls wird die Projektierung dem EPROM 25 eingeprägt. In beiden Fällen wird aber die Zentraleinheit 15 des Automatisierungsgeräts projektiert.

## Patentansprüche

1. Rechnergestütztes Entwurfsverfahren für ein programmierbares Automatisierungssystem, insbesondere eine speicherprogrammierbare Steuerung, zur Steuerung und/oder Überwachung einer technischen Anlage (19),
- welches zumindest folgende mit einer Zentraleinheit (15) kommunikativ verbindbaren Komponenten aufweist:
-- mindestens eine Eingabebaugruppe (16),
-- mindestens eine Ausgabebaugruppe (17) und
-- eine Programmiereinheit (1) mit einem Prozessor (2), einem Speicher (4), mindestens einer Eingabeeinheit (11, 12) und mindestens einer Ausgabeeinheit (13, 14),
- wobei über mindestens einen mit der Eingabebaugruppe (16) in elektrisch leitender Verbindung stehenden Eingangs-Signalpfad an die Zentraleinheit (15) Signale von einem in der technischen Anlage (19) befindlichen Geber (27) übertragbar sind und
- wobei über mindestens einen mit der Ausgabebaugruppe (17) in elektrisch leitender Verbindung stehenden Ausgangs-Signalpfad von der Zentraleinheit (15) Signale an ein in der technischen Anlage (19) befindliches Stellglied (39) übertragbar sind,
- wobei der Eingangs-Signalpfad bzw. der Ausgangs-Signalpfad im Fehlerfalle ein Fehlerverhalten hat,
**dadurch gekennzeichnet**,
- daß alle jeweils mit einem bestimmten Fehlerverhalten korrespondierenden schaltungstechnischen Realisierungen eines Signalpfades zusammen mit dem Fehlerverhalten im Speicher (4) abgespeichert sind,
- daß mittels der Eingabeeinheit (11, 12) mindestens einer der Signalpfade selektiert wird,
- daß mittels der Eingabeeinheit (11, 12) für den selektierten Signalpfad eines dieser Fehlerverhalten ausgewählt wird,
- daß durch die Programmiereinheit (1) aus den im Speicher (4) abgespeicherten Realisierungen eines Signalpfades mindestens eine dem ausgewählten Fehlerverhalten entsprechende Realisierung des selektierten Signalpfades abgerufen wird und
- daß mittels der Ausgabeeinheit (13, 14) mindestens eine dem ausgewählten Fehlerverhalten entsprechende schaltungstechnische Realisierung des selektierten Signalpfades ausgegeben wird.

2. Rechnergestütztes Entwurfsverfahren nach Anspruch 1, **dadurch gekennzeichnet**, daß das auswählbare Fehlerverhalten zu erkennende und/oder zu lokalisierende Fehler umfaßt.

3. Rechnergestütztes Entwurfsverfahren nach Anspruch 1 oder 2, **dadurch gekennzeichnet**, daß mehrere Signalpfade zu einer Gruppe zusammenfaßbar sind und daß die Auswahl des Fehlerverhaltens und gegebenenfalls auch der Abruf und die Ausgabe der Realisierung nur einmal erfolgt.

4. Rechnergestütztes Entwurfsverfahren nach einem der Ansprüche 1 bis 3, **dadurch gekennzeichnet**, daß durch die Programmiereinheit (1) aus den im Speicher (4) abgespeicherten Realisierungen eines Signalpfades eine Liste zulässiger, dem ausgewählten Fehlerverhalten entsprechende Realisierungen des selektierten Signalpfades abgerufen wird, wobei die zulässigen Realisierungen mittels der mindestens einen Ausgabeeinheit (13, 14) ausgebbar sind.

5. Programmierbares Automatisierungssystem, insbesondere speicherprogrammierbare Steuerung, zur Steuerung und/oder Überwachung einer technischen Anlage (19),
- welche zumindest folgende mit einer Zentraleinheit (15) kommunikativ verbindbaren Komponenten aufweist:
-- mindestens eine Eingabebaugruppe (16),
-- mindestens eine Ausgabebaugruppe (17) und
-- eine Programmiereinheit (1) mit einem Prozessor (2), einem Speicher (4), mindestens einer Eingabeeinheit (11, 12) und mindestens einer Ausgabeeinheit (13, 14),
- wobei über mindestens einen mit der Eingabebaugruppe (16) in elektrisch leitender Verbindung stehenden Eingangs-Signalpfad an die Zentraleinheit (15) Signale von einem in der technischen Anlage (19) befindlichen Geber (27) übertragbar sind und
- wobei über mindestens einen mit der Ausgabebaugruppe (17) in elektrisch leitender Verbindung stehenden Ausgangs-Signalpfad von der Zentraleinheit (15) Signale an ein in der technischen Anlage (19) befindliches Stellglied (39) übertragbar sind,
- wobei der Eingangs-Signalpfad bzw. der Ausgangs-Signalpfad im Fehlerfalle ein Fehlerverhalten hat,
**dadurch gekennzeichnet**,
- daß alle jeweils mit einem bestimmten Fehlerverhalten korrespondierenden schaltungstechnischen Realisierungen eines Signalpfades zusammen mit dem Fehlerverhalten im Speicher (4) abgespeichert sind,
- daß mittels der Eingabeeinheit (11, 12) mindestens einer der Signalpfade selektierbar ist,
- daß mittels der Eingabeeinheit (11, 12) für den selektierten Signalpfad eines dieser Fehlerverhalten auswählbar ist,
- daß durch die Programmiereinheit (1) aus den im Speicher (4) abgespeicherten Realisierungen eines Signalpfades mindestens eine dem ausgewählten Fehlerverhalten entsprechende Realisierung des selektierten Signalpfades abrufbar ist und
- daß mittels der Ausgabeeinheit (13, 14) mindestens eine dem ausgewählten Fehlerverhalten entsprechende schaltungstechnische Realisierung des selektierten Signalpfades ausgebbar ist.

6. Programmierbare Automatisierungssystem nach Anspruch 5, **dadurch gekennzeichnet**, daß das auswählbare Fehlerverhalten zu erkennende und/oder zu lokalisierende Fehler umfaßt.

7. Programmierbare Automatisierungssystem nach Anspruch 5 oder 6, **dadurch gekennzeichnet**, daß mehrere Signalpfade zu einer Gruppe zusammenfaßbar - sind und daß die Auswahl des Fehlerverhaltens und gegebenenfalls auch der Abruf und die Ausgabe der Realisierung nur einmal erfolgt.

8. Programmierbare Automatisierungssystem nach einem der Ansprüche 5 bis 7, **dadurch gekennzeichnet**, daß durch die Programmiereinheit (1) aus den im Speicher (4) abgespeicherten Realisierungen eines Signalpfades eine Liste zulässiger, dem ausgewählten Fehlerverhalten entsprechende Realisierungen des selektierten Signalpfades abrufbar ist, wobei die zulässigen Realisierungen mittels der mindestens einen Ausgabeeinheit (13, 14) ausgebbar sind.

## Claims

1. Computer-aided design method for a programmable automation system, in particular a memory-programmable control, to control and/or monitor a technical installation (19),
- which has at least the following components which can be connected to a central unit (15) so that they can communicate with it:
-- at least one input module (16),
-- at least one output module (17) and
-- a programming unit (1) with a processor (2), a memory (4), at least one input unit (11, 12) and at least one output unit (13, 14),
- whereby by way of at least one input signal path electroconductively connected to the input module (16), signals can be transmitted to the central unit (15) from a transmitter (27) located in the technical installation (19) and
- whereby by way of at least one output signal path electroconductively connected to the output module (17) signals can be transmitted from the central unit (15) to an actuator (39) located in the technical installation (19),
- whereby the input signal path and the output signal path have an error behaviour in the event of error,
characterized in that
- all realizations of a signal path in terms of circuit engineering and corresponding in each case with a certain error behaviour are stored together with the error behaviour in the memory (4),
- by means of the input unit (11, 12) at least one of the signal paths is selected,
- by means of the input unit (11, 12) for the selected signal path one of these error behaviours is selected,
- by means of the programming unit (1), from the realizations of a signal path stored in the memory (4), at least one realization of the selected signal path corresponding to the selected error behaviour is retrieved and
- by means of the output unit (13, 14) at least one realization of the selected signal path in terms of circuit engineering and corresponding to the selected error behaviour is emitted.

2. Computer-aided design method according to claim 1, characterized in that the selectable error behaviour comprises errors to be detected and/or located.

3. Computer-aided design method according to claim 1 or 2, characterized in that several signal paths can be combined into one group and that the selection of the error behaviour and perhaps also the retrieval and the output of the realization only take place once.

4. Computer-aided design method according to one of claims 1 to 3, characterized in that by means of the programming unit (1), from the realizations of a signal path stored in the memory (4) a list of permitted realizations of the selected signal path corresponding to the selected error behaviour is retrieved, whereby the permitted realizations can be emitted by means of the at least one output unit (13, 14).

5. Programmable automation system, in particular a memory-programmable control, to control and/or monitor a technical installation (19),
- which has at least the following components which can be connected to a central unit (15) so that they can communicate with it:
-- at least one input module (16),
-- at least one output module (17) and
-- a programming unit (1) with a processor (2), a memory (4), at least one input unit (11, 12) and at least one output unit (13, 14),
- whereby, by way of at least one input signal path electroconductively connected to the input module (16), signals can be transmitted to the central unit (15) by a transmitter (27) located in the technical installation (19) and
- whereby, by way of at least one output signal path electroconductively connected to the output module (17), signals can be transmitted from the central unit (15) to an actuator (39) located in the technical installation (19),
- whereby the input signal path and the output signal path have an error behaviour in the event of error,
characterized in that
- all realizations of a signal path in terms of circuit engineering and corresponding in each case with a certain error behaviour are stored together with the error behaviour in the memory (4),
- by means of the input unit (11, 12) at least one of the signal paths can be selected,
- by means of the input unit (11, 12) for the selected signal path one of these error behaviours can be selected,
- by means of the programming unit (1), from the realizations of a signal path stored in the memory (4) at least one realization of the selected signal path corresponding to the selected error behaviour can be retrieved and
- by means of the output unit (13, 14) at least one realization of the selected signal path in terms of circuit engineering and corresponding to the selected error behaviour can be emitted.

6. Programmable automation system according to claim 5, characterized in that the selectable error behaviour comprises errors to be detected and/or located.

7. Programmable automation system according to claim 5 or 6, characterized in that several signal paths can be combined into one group and that the selection of the error behaviour and perhaps also the retrieval and the output of the realization only take place once.

8. Programmable automation system according to one of claims 5 to 7, characterized in that by way of the programming unit (1), from the realizations of a signal path stored in the memory (4) a list of permitted realizations of the selected signal path corresponding to the selected error behaviour can be retrieved, whereby the permitted realizations can be emitted by means of the at least one output unit (13, 14).

## Revendications

1. Procédé de conception assistée par ordinateur d'un système d'automatisation programmable, notamment d'un automate programmable servant à commander et/ou à surveiller une installation (19) technique,
- qui comporte au moins les composants suivants, qui peuvent être reliés du point de vue de la communication avec une unité (15) centrale:
-- au moins un module (16) d'entrée
-- au moins un module (17) de sortie et
-- une unité (1) de programmation comportant un processeur (2), une mémoire (4), au moins une unité (11, 12) d'entrée et au moins une unité (13, 14) de sortie,
- des signaux provenant d'un transmetteur (27) se trouvant dans l'installation (19) technique pouvant, par l'intermédiaire d'au moins une voie de transmission de signaux d'entrée se trouvant en liaison conductrice de l'électricité avec le module (16) d'entrée, être transmis à l'unité (15) centrale, et
- des signaux, par l'intermédiaire d'au moins une voie de transmission de signaux de sortie se trouvant en liaison conductrice de l'électricité avec le module (17) de sortie, pouvant être transmis de l'unité (15) centrale à un élément (39) de réglage se trouvant dans l'installation (19) technique,
- la voie de transmission de signaux d'entrée et la voie de transmission de signaux de sortie ayant en cas d'erreur un comportement en cas d'erreur,
caractérisé en ce que
- l'on met en mémoire dans la mémoire (4), conjointement avec le comportement en cas d'erreur, tous les modes de réalisation d'une voie de transmission de signaux de la technique des circuits, correspondant chacun à un comportant déterminé en cas d'erreur,
- au moyen de l'unité (11, 12) d'entrée, on sélectionne au moins une des voies de transmission de signaux,
- au moyen de l'unité (11, 12) d'entrée, on sélectionne pour la voie de transmission de signaux sélectionnée l'un de ces comportements en cas d'erreur,
- on appelle par l'unité (1) de programmation, parmi les modes de réalisation d'une voie de transmission de signaux mis en mémoire dans la mémoire (4), au moins un mode de réalisation de la voie de transmission de signaux sélectionnée, correspondant au comportement en cas d'erreur sélectionné et
- au moyen de l'unité (13, 14) de sortie, on sort au moins un mode de réalisation de la technique des circuits de la voie de transmission de signaux sélectionnée, correspondant au comportement en cas d'erreur sélectionné.

2. Procédé de conception assistée par ordinateur suivant la revendication 1, caractérisé en ce que le comportement en cas d'erreur pouvant être sélectionné comprend des erreurs pouvant être identifiées et/ou localisées.

3. Procédé de conception assistée par ordinateur suivant la revendication 1 ou 2, caractérisé en ce que l'on peut réunir en un groupe plusieurs voies de transmission de signaux et en ce que l'on n'effectue qu'une seule fois la sélection du comportement en cas d'erreur et éventuellement aussi l'appel et la sortie du mode de réalisation.

4. Procédé de conception assistée par ordinateur suivant l'une des revendications 1 à 3, caractérisé en ce que l'on appelle par l'unité (1) de programmation, parmi les modes de réalisation d'une voie de transmission de signaux mis en mémoire dans la mémoire (4), une liste de modes de réalisation permis, correspondant au comportement en cas d'erreur sélectionné, de la voie de transmission sélectionnée, les modes de réalisation permis pouvant être sortis au moyen d'au moins une unité (13, 14) de sortie.

5. Système d'automatisation programmable, notamment automate programmable, servant à commander et/ou à surveiller une installation (19) technique,
- qui comporte au moins les composants suivants, qui peuvent être reliés du point de vue de la communication avec une unité (15) centrale:
-- au moins un module (16) d'entrée
-- au moins un module (17) de sortie et
-- une unité (1) de programmation comportant un processeur (2), une mémoire (4), au moins une unité (11, 12) d'entrée et au moins une unité (13, 14) de sortie,
- des signaux provenant d'un transmetteur (27) se trouvant dans l'installation (19) technique pouvant, par l'intermédiaire d'au moins une voie de transmission de signaux d'entrée se trouvant en liaison conductrice de l'électricité avec le module (16) d'entrée, être transmis à l'unité (15) centrale, et
- des signaux pouvant, par l'intermédiaire d'au moins une voie de transmission de signaux de sortie se trouvant en liaison conductrice de l'électricité avec le module (17) de sortie, être transmis de l'unité (15) centrale à un élément (39) de réglage se trouvant dans l'installation (19) technique,
- la voie de transmission de signaux d'entrée et la voie de transmission de signaux de sortie ayant en cas d'erreur un comportement en cas d'erreur,
caractérisé en ce que
- tous les modes de réalisation d'une voie de transmission de signaux de la technique des circuits, correspondant chacun à un comportant déterminé en cas d'erreur, sont mis en mémoire dans la mémoire (4) conjointement avec le comportement en cas d'erreur,
- au moins une des voies de transmission de signaux peut être sélectionnée au moyen de l'unité (11, 12) d'entrée,
- l'un de ces comportements en cas d'erreur peut être sélectionné au moyen de l'unité (11, 12) d'entrée pour la voie de transmission de signaux sélectionnée,
- il peut être appelé par l'unité (1) de programmation, parmi les modes de réalisation d'une voie de transmission de signaux mis en mémoire dans la mémoire (4), au moins un mode de réalisation de la voie de transmission de signaux sélectionnée, correspondant au comportement en cas d'erreur sélectionné et
- il est sorti au moyen de l'unité (13, 14) de sortie au moins un mode de réalisation de la technique des circuits de la voie de transmission de signaux sélectionnée, correspondant au comportement en cas d'erreur sélectionné.

6. Système d'automatisation programmable suivant la revendication 5, caractérisé en ce que le comportement en cas d'erreur pouvant être sélectionné comprend des erreurs pouvant être identifiées et/ou localisées.

7. Système d'automatisation programmable suivant la revendication 5 ou 6, caractérisé en ce qu'il peut être réuni en un groupe plusieurs voies de transmission de signaux et en ce que la sélection du comportement en cas d'erreur et éventuellement aussi l'appel et la sortie du mode de réalisation ne s'effectuent qu'une seule fois.

8. Système d'automatisation programmable suivant l'une des revendications 5 à 7, caractérisé en ce qu'il est appelé par l'unité (1) de programmation, parmi les modes de réalisation d'une voie de transmission de signaux mis en mémoire dans la mémoire (4), une liste de modes de réalisation permis, correspondant au comportement en cas d'erreur sélectionné, de la voie de transmission sélectionnée, les modes de réalisation permis pouvant être sortis au moyen d'au moins une unité (13, 14) de sortie.
